# EUROPÄISCHE PATENTANMELDUNG

(11) **EP 2 434 205 A2**
(43) Veröffentlichungstag der Anmeldung: **28.03.2012**
(21) Anmeldenummer: 11180656.8
(22) Anmeldetag: 09.09.2011
(51) Int. Cl.: F21S 8/12, F21S 8/10

(54) **Modularer Infrarotstrahler für ein Infrarotsichtgerät eines Straßenkraftfahrzeugs**

(30) Priorität: 23.09.2010 DE 102010041254; 17.02.2011 DE 102011004293
(71) Anmelder: Automotive Lighting Reutlingen GmbH, 72762 Reutlingen (DE)
(72) Erfinder: Vogt, Henning, Dr., 70567 Stuttgart (DE); Buchberger, Christian, Dr., 72770 Reutlingen (DE); Rosenhahn, Ernst-Olaf, Dr., 72411 Bodelshausen (DE)
(74) Vertreter: Dreiss

(57) **Zusammenfassung**

Vorgestellt wird ein Infrarotstrahler (12) für ein Infrarotsichtgerät (10) eines Straßenkraftfahrzeuges, der wenigstens eine Infrarotstrahlung emittierende Halbleiter-Infrarotstrahlungsquelle aufweist. Der Infrarotstrahler zeichnet sich dadurch aus, dass der Infrarotstrahler (12) wenigstens zwei Module (28, 30) aufweist, von denen jedes einzelne Modul (28, 30) wenigstens eine Infrarotstrahlung (14) emittierende Halbleiter-Infrarotstrahlungsquelle (32, 36) und eine Infrarotstrahlung (14) der Halbleiter-Infrarotstrahlungsquelle (32, 36) verteilende optische Vorrichtung (34, 38) aufweist.

## Beschreibung

Die vorliegende Erfindung betrifft einen Infrarotstrahler nach dem Oberbegriff des Anspruchs 1. Ein solcher Infrarotstrahler ist aus der DE 10 2007 026 780 A1 bekannt und dient zur Ausleuchtung des räumlichen Vorfeldes des Kraftfahrzeugs mit einer Fernlichtcharakteristik. Da das menschliche Auge für Infrarotstrahlung nicht empfindlich ist, wird eine Blendung des Gegenverkehrs dabei vermieden.

Neben dem Infrarotstrahler weisen Infrarotsichtgeräte wenigstens einen für Infrarotstrahlung empfindlichen Detektor, eine Signalverarbeitung und ein Mittel zur Visualisierung auf, das die vom Detektor im infraroten Wellenlängenbereich aufgenommene und von der Signalverarbeitung verarbeitete Strahlungsverteilung als für das menschliche Auge sichtbares Bild des beleuchteten Kraftfahrzeugvorfeldes abbildet. Der Detektor ist zum Beispiel eine Kamera und das Mittel zu Visualisierung ist zum Beispiel eine Flüssigkristallanzeige. Das Spektrum der Strahlung einer für aktive Infrarotsichtgeräte verwendeten Strahlungsquelle umfasst insbesondere Wellenlängen im Bereich der nahen Infrarotstrahlung (etwa 800 nm bis 2500 nm).

Als Alternative zu dem eingangs genannten Infrarotstrahler wurden bereits früher Infrarotstrahler verwendet, die mit einer Kombination aus einem elliptischen Reflektor, einer Glaslinse, einer Halogenlampe als Lichtquelle und einem optischen Kantenfilter arbeiten. Das Filter lässt dabei nur den infraroten Anteil des von der Lampe über einen breiten Bereich des Spektrums emittierten Lichtes passieren und blockiert den restlichen sichtbaren Anteil. Die Effizienz solcher Systeme ist eher gering.

Darüber hinaus findet man in letzter Zeit immer häufiger Infrarotstrahler auf Halbleiterbasis. Die infrarote Strahlung emittierende Lichtquelle eines solchen Infrarotstrahlers besteht dabei aus einer Array-Anordnung einzelner LED-Chips, deren abgegebene Strahlung im Vergleich zum zuvor beschriebenen Halogenstrahler auf einen schmalen Spektralbereich in der Nähe des sichtbaren Spektrums konzentriert ist. Die abgegebene infrarote Strahlung wird durch einen Reflektor aufgenommen, der die gewünschte Strahlungsverteilung auf der Fahrbahn erzeugt. Die Effizienz ist im Vergleich zum Halogenstrahler größer. Die eingangs genannte DE 10 2007 026 780 A1 zeigt ein Beispiel eines solchen Infrarotstrahlers.

Aufgrund der Array-Anordnung ist die strahlungsemittierende Fläche mit zum Beispiel ca. 2 x 5mm² relativ groß, d.h. für eine realistische Strahlungsverteilung benötigt man Reflektoren die eine für LED als Halbleiter-Infrarotstrahlungsquellen relativ große Brennweite und daraus resultierende, relativ große Abmessungen aufweisen. Außerdem ergeben sich aus der Konzentration mehrerer Chips auf geringem Raum in der Array-Anordnung Nachteile für das Thermomanagement, also für die Einhaltung eines vergleichsweise engen Betriebstemperaturfensters, was bei Halbleiter-Infrarotstrahlungsquellen von großer Bedeutung für die Farbstabilität und die Strahlungsstärke des ausgesandten Lichtes und für die Lebensdauer ist.

Sowohl die mit Halogenlampen als Projektionssystem arbeitenden Infrarotstrahler als auch die bekannten, mit Halbleiter-Infrarotstrahlungsquellen und einem großen Reflektor als Reflexionssystem arbeitenden Infrarotstrahler lassen sich durch ihre großen Abmessungen nur schwer an die unterschiedlichen Einbausituationen verschiedener Automobilscheinwerfer anpassen, da der von ihnen benötigte Bauraum in Form und Größe gar nicht oder nur unter großem konstruktivem und herstellungstechnischen Aufwand veränderbar ist. Dies schränkt die Gestaltungsfreiheit beim Kraftfahrzeugdesign stark ein und/oder es erhöht die für eine Ausrüstung mit einem Infrarotsichtsystem fällig werdenden Kosten aufgrund des genannten großen Aufwandes.

Vor diesem Hintergrund besteht die Aufgabe der Erfindung in der Angabe eines Infrarotstrahlers der eingangs genannten Art, der sich mit einem verringerten Aufwand an die Einbausituation in Kraftfahrzeugen, insbesondere in Kraftfahrzeugscheinwerfern, anpassen lässt und der das Thermomanagement erleichtert.

Diese Aufgabe wird mit den Merkmalen des Anspruchs 1 gelöst. Der erfindungsgemäße Infrarotstrahler zeichnet sich dadurch aus, dass er wenigstens zwei Module aufweist, von denen jedes einzelne Modul wenigstens eine Halbleiter-Infrarotstrahlungsquelle und eine Licht der Halbleiter-Infrarotstrahlungsquelle verteilende optische Vorrichtung aufweist. Für n Halbleiter-Infrarotstrahlungsquellen sind daher insbesondere wenigstens n optische Vorrichtungen vorgesehen, von denen jede jeweils genau einer Halbleiter-Infrarotstrahlungsquelle zugeordnet ist. Es können aber auch mehr als eine optische Vorrichtung einer einzelnen Halbleiter-Infrarotstrahlungsquelle zugeordnet sein, zum Beispiel ein Reflektor und eine Linse.

Durch den modularen Aufbau wird der beim Stand der Technik übliche monolithische Aufbau eines Infrarotstrahlers gewissermaßen aufgebrochen. Ein erfindungsgemäßer Infrarotstrahler besteht aus mehreren einzelnen Systemen, die in ihrer Gesamtheit die geforderte Infrarotstrahlungsverteilung erzeugen. Die einzelnen Systeme können als Reflexionssystem, abbildendes Projektionssystem (d.h. mit virtuellem Zwischenbild) oder als direkt abbildendes System ausgestaltet sein. Eine Kombination der einzelnen Ausführungsformen ist möglich.

Ein reines Reflexionssystem besteht z.B. aus mehreren Kammern, in deren Brennpunkt sich jeweils eine einzelne Halbleiter-Infrarotstrahlungsquelle in Form einer Infrarotleuchtdiode befindet. In der Infrarotleuchtdiode kommt vorzugsweise zur Erhöhung der optischen Effizienz nur ein Halbleiterbaustein zur Strahlungserzeugung zum Einsatz. Zur Steigerung der emittierten Strahlungsleistung pro Modul ist es auch denkbar, dass mehrere Halbleiterbausteine (LED-Chips) in einem gemeinsamen LED-Gehäuse verbaut werden. Wegen der Aufteilung der Gesamtzahl der Halbleiter-Infrarotstrahlungsquellen auf mehrere Module bleiben die wesentlichen Vorteile der Erfindung auch bei dieser Ausgestaltung erhalten. Die von den einzelnen Reflektorkammern abgegebenen infraroten Strahlenbündel bilden dann in der Summe die für das menschliche Auge unsichtbare Gesamtstrahlungsverteilung, mit der die Fahrbahn ausgeleuchtet wird.

Jedes Modul ist für sich betrachtet kleiner als der bekannte monolithisch und damit einstückig zusammenhängend aufgebaute Infrarotstrahler. In der Summe über alle Module kann jedoch das gleiche Leistungsspektrum, insbesondere die gleiche Strahlungsverteilung wie mit einem einzelnen, monolithisch zusammenhängenden und damit entsprechend großen Infrarotstrahler erzeugt werden. Die kleineren Module stellen also insbesondere die gleiche Lichtfunktionalität zur Verfügung wie der monolithische Infrarotstrahler. Im Vergleich zu dem bekannten Infrarotstrahler sind sie jedoch durch eine Verteilung auf mehrere kleinere Einbauräume in einem Scheinwerfer wesentlich leichter unterzubringen als ein großer Infrarotstrahler. Dabei lässt sich die Anordnung der einzelnen Module im Scheinwerfer aufgrund ihrer vergleichsweise geringen Größe relativ frei wählen.

Durch die Aufteilung auf mehrere einzelne Module mit jeweils einer dem Modul zugeordneten Halbleiter-Infrarotstrahlungsquelle ist die lichttechnische Funktion modular und skalierbar, d.h. die Zahl und Anordnung der einzelnen Module im Scheinwerfer lässt sich relativ frei wählen.

Durch den modularen Charakter des Systems können unterschiedlich ausgestaltete Module, zum Beispiel Reflektorkammern, zu verschiedenen Bereichen der Strahlungsverteilung beitragen. Die geringere Ausdehnung der einzelnen LED-Chips (ca. 1 mm²) ermöglicht eine kompakte Bauweise der Module mit relativ geringer Ausdehnung.

Im Ergebnis wird damit eine Infrarotstrahlungsquelle offenbart, die in ihrer Leistung skalierbar ist und die gleichzeitig besser in einen vorgegebenen Bauraum eingepasst werden kann.

Darüber hinaus ergibt sich aus dem modularen Aufbau und der Verteilung der Module auf einen insgesamt größeren Raum eine größere Entfernung zwischen den Halbleiter-Infrarotstrahlungsquellen, was das Thermomanagement erleichtert. Dies ergibt sich daraus, dass die Aufteilung auf einzelne Module eine räumliche Aufteilung der in den Halbleiterchips anfallenden elektrischen Verlustwärme mit sich bringt. Die Erleichterung ergibt sich ferner daraus, dass das modular verteilte System effektiver gekühlt werden kann und zusätzlich daraus, dass gerade Halbleiter-IR-Strahlungsquellen eine deutlichere Verringerung des emittierenden Strahlungsflusses mit höheren Temperaturen zeigen, als z.B. weiße LEDs. Die verbesserte Entwärmung erlaubt einen Betrieb mit einer im Mittel niedrigeren Temperatur, bei der ein größerer Strahlungsfluss emittiert wird als bei einer höheren Temperatur.

Insgesamt stellt der hier vorgestellte Anmeldungsgegenstand einen Infrarotstrahler zum Einsatz in einem Kraftfahrzeug zur Ausleuchtung der Fahrbahn mit Infrarotstrahlung vor, der wenigstens zwei Module aufweist, wobei jedes dieser Module eine eigene Halbleiter-Infrarotstrahlungsquelle besitzt. Die Halbleiter-Infrarotstrahlungsquelle besteht vorzugsweise aus einem LED-Chip um eine bestmögliche optische Effizienz zu erreichen und sendet im Wesentlichen infrarote Strahlung aus.

Die einzelnen Module können als Reflexionssystem, als abbildendes Projektionssystem oder als direkt abbildendes Projektionssystem ausgeführt sein. Die gesamte Strahlungsverteilung wird durch die Kombination von mehreren separaten Modulen, die untereinander gleich oder auch unterschiedlich sein können, erzeugt.

Wegen ihres modularen Charakters können sich die einzelnen Module eines solchen Infrarotstrahlers jeweils in ihrer individuell erzeugten Strahlungsverteilung unterscheiden, um so durch eine Optimierung der einzelnen Module eine in der Summe optimierte Strahlungsverteilung zu erhalten. Die Module können auch skalierbar gestaltet sein. Dabei wird unter einer Skalierbarkeit verstanden, dass die Summe mehrerer Module eine ähnliche Strahlungsverteilung erzeugt wie ein einzelnes Modul, wobei die Intensität innerhalb der erzeugten Strahlungsverteilungen aber jeweils mit der Anzahl der verwendeten Module skaliert. In der Summe wird damit eine Infrarotstrahlungsquelle angegeben, die durch den modularen und skalierbaren Charakter einfacher in gegebene Bauräume einzubringen ist und dabei gleichzeitig effizienter entwärmt werden kann, wodurch zusätzlich mehr IR-Strahlung bereit gestellt werden kann.

Eine bevorzugte Ausgestaltung des Infrarotstrahlers zeichnet sich dadurch aus, dass jede Halbleiter-Infrarotstrahlungsquelle einen Infrarot-Leuchtdioden-Chip aufweist.

Bevorzugt ist auch, dass eine optische Vorrichtung des Infrarotstrahlers einen Reflektor aufweist und die Halbleiter-Infrarotstrahlungsquelle zusammen mit dem Reflektor ein Reflexionssystem bildet.

Bevorzugt ist auch, dass der Reflektor ein Freiformflächenreflektor ist.

Eine weitere bevorzugte Ausgestaltung zeichnet sich dadurch aus, dass eine optische Vorrichtung einen Reflektor und eine Projektionslinse aufweist und die optische Vorrichtung zusammen mit der Halbleiter-Infrarotstrahlungsquelle ein Projektionssystem bildet.

Ferner ist bevorzugt, dass die optische Vorrichtung eine Projektionslinse aufweist und die Projektionslinse zusammen mit der Halbleiter-Infrarotstrahlungsquelle ein die Halbleiterlichtlichtquelle direkt abbildendes Projektionssystem bildet.

Bevorzugt ist auch, dass die optische Vorrichtung eine Licht brechende Vorsatzoptik aus Licht leitendem Material aufweist.

Ferner ist bevorzugt, dass der Infrarotstrahler mehrere untereinander gleiche Module und/oder mehrere untereinander verschiedene Module aufweist.

Bevorzugt ist auch, dass die verschiedenen Module des Infrarotstrahlers über eine gemeinsame Platine mit elektrischer Leistung versorgt werden und/oder gesteuert werden.

Ferner ist bevorzugt, dass die gemeinsame Platine eine ebene Platine oder eine gestufte, in sich starre Platine oder eine flexible Platine ist.

Bevorzugt ist auch, dass jedes Modul des Infrarotstrahlers wenigstens einen Modul - individuellen Kühlkörper aufweist, der mit der Halbleiter-Infrarotstrahlungsquelle thermisch gekoppelt ist.

Ferner ist bevorzugt, dass Module des Infrarotstrahlers, von denen jedes eine Infrarotstrahlung emittierende

Halbleiter-Infrarotstrahlungsquelle und eine Strahlung der Halbleiter-Infrarotstrahlungsquelle verteilende optische Vorrichtung aufweist, auf einem gemeinsamen Träger befestigt sind.

Bevorzugt ist auch, dass der gemeinsame Träger parallel zu einer horizontalen Achse ausgerichtet und um diese Achse herum schwenkbar in einer Beleuchtungseinrichtung gelagert ist.

In einer bevorzugten Ausgestaltung ist der Infrarotstrahler ein Bestandteil einer Beleuchtungseinrichtung für ein Kraftfahrzeug.

Dabei ist bevorzugt, dass die Beleuchtungseinrichtung ein Kraftfahrzeugscheinwerfer ist, der zusätzlich wenigstens ein Lichtmodul für sichtbares Licht aufweist.

Bevorzugt ist auch, dass ein Träger, auf dem Module des Infrarotstrahlers, von denen jedes eine Infrarotstrahlung emittierende Halbleiter-Infrarotstrahlungsquelle und eine Strahlung der Halbleiter-Infrarotstrahlungsquelle verteilende optische Vorrichtung aufweist, gemeinsam befestigt sind, gegenüber einem Lichtmodul für sichtbares Licht durch Verschwenkung einstellbar ist.

Ferner ist bevorzugt, dass der Träger zusätzlich so mit dem Lichtmodul für sichtbares Licht mechanisch gekoppelt ist und dass der Infrarotstrahler im Betrieb zusammen mit dem Lichtmodul für sichtbares Licht um eine horizontale Achse geschwenkt wird. Dadurch wird eine Leuchtweitenregelung für die Infrarotstrahlung ohne großen Aufwand durch eine Ankopplung an eine häufig ohnehin vorhandene Leuchtweitenregelung für sichtbares Licht erzielt.

Bevorzugt ist auch, dass die Beleuchtungseinrichtung eine Bugleuchte ist, die zusätzlich wenigstens eine Signallichtfunktionen erfüllende Lichtquelle aufweist. Ferner ist bevorzugt, dass die Beleuchtungseinrichtung als separater Infrarotscheinwerfer realisiert ist, der keine weiteren Lichtquellen für sichtbares Licht aufweist.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: ein erstes Ausführungsbeispiel eines erfindungsgemäßen Infrarotstrahlers in einem Infrarotsichtgerät eines Straßenkraftfahrzeugs;
- Fig. 2: ein Beispiel einer von dem Infrarotstrahler erzeugten Strahlungsverteilung;
- Fig. 3: ein Reflexionsmodul eines Infrarotstrahlers;
- Fig. 4: ein Projektionsmodul eines Infrarotstrahlers;
- Fig. 5: ein mit einer Licht brechenden und gegebenenfalls intern total reflektierenden Vorsatzoptik arbeitendes Modul;
- Fig. 6: eine Ausgestaltung eines Infrarotstrahlers, der mehrere untereinander gleiche Module aufweist;
- Fig. 7: eine dazu alternative Ausgestaltung, bei der ein Infrarotstrahler mehrere untereinander verschiedene Module aufweist;
- Fig. 8: das Erscheinungsbild eines Scheinwerfers, bei dem Module eines Infrarotstrahlers unterhalb von Lichtmodulen angeordnet sind;
- Fig. 9: verschiedene Ausgestaltungen von Anordnungen von Infrarotlicht emittierenden Halbleiter-Infrarotstrahlungsquellen, die über eine gemeinsame Platine mit elektrischer Leistung versorgt und/oder gesteuert werden;
- Fig. 10: eine Ausgestaltung einer Infrarotstrahlung emittierenden Halbleiter-Infrarotstrahlungsquelle, zusammen mit einer Platine und einem Kühlkörper, und
- Fig. 11: eine bevorzugte Ausgestaltung eines Infrarotstrahlers 11.

Gleiche Bezugszeichen verweisen dabei in den verschiedenen Figuren jeweils auf gleiche oder zumindest ihrer Funktion nach gleiche Elemente.

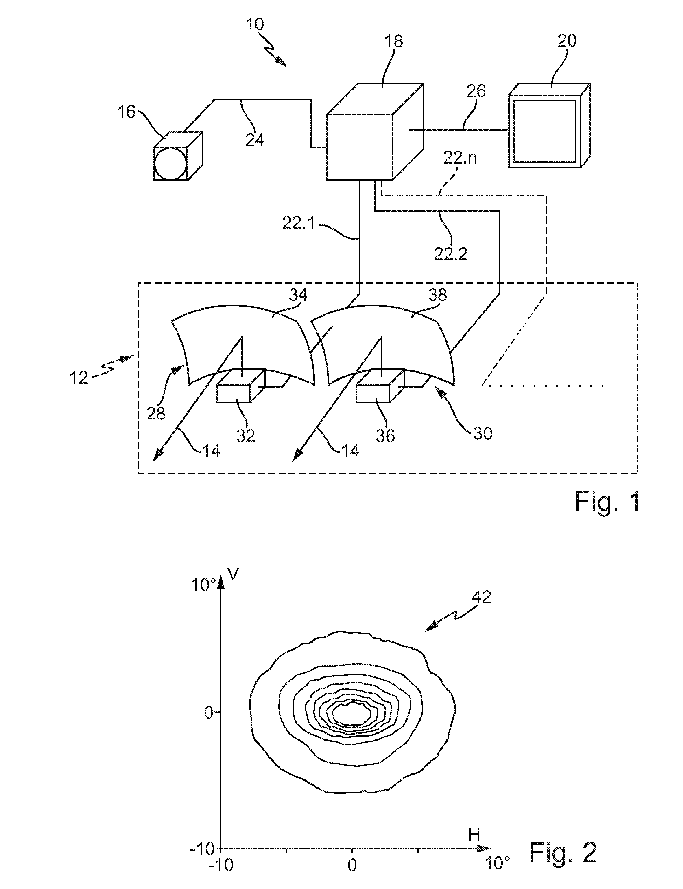

Im Einzelnen zeigt die Fig. 1 ein Infrarotsichtgerät 10 eines Straßenkraftfahrzeugs. Das Infrarotsichtgerät 10 weist einen Infrarotstrahler 12 auf, der durch seine Einbaulage und Abstrahlrichtung dazu eingerichtet ist, einen vorbestimmten Bereich des Umfeldes des Straßenkraftfahrzeugs, insbesondere das in Fahrtrichtung liegende Vorfeld, mit Infrarotstrahlung 14 zu beleuchten. Darüber hinaus weist das Infrarotsichtgerät 10 einen Detektor 16, beispielsweise eine für Infrarotstrahlung empfindliche Kamera, ein Steuer- und Signalverarbeitungsgerät 18 sowie ein Mittel 20 zur Visualisierung, zum Beispiel eine Flüssigkristallanzeige, auf.

Der Detektor 16 ist durch seine Einbaurichtung und durch seinen räumlichen Erfassungsbereich (field of view) sowie durch seine auf die Frequenz der Infrarotstrahlung 14 abgestimmte spektrale Empfindlichkeit dazu eingerichtet, Infrarotstrahlung 14, die von Objekten im mit Infrarotstrahlung 14 beleuchteten Bereich des Kraftfahrzeugumfelds reflektiert wird, aufzunehmen und in Signale, insbesondere elektrische Signale umzuwandeln, die vom Steuer- und Signalverarbeitungsgerät 18 aufbereitet und in Ansteuersignale für das Mittel 20 zur Visualisierung umgewandelt werden. Die Umwandlung erfolgt dabei so, dass das Mittel 20 den mit Infrarotstrahlung 14 beleuchteten Bereich des Umfeldes des Kraftfahrzeuges in für das menschliche Auge wahrnehmbarer Weise visualisiert, zum Beispiel durch eine Abbildung auf einem Bildschirm des Mittels 20.

Das Steuer- und Signalverarbeitungsgerät 18 ist bevorzugt dazu eingerichtet, den Betrieb des Infrarotstrahlers 12 zu steuern. Der Infrarotstrahler wird zum Beispiel gepulst betrieben, so dass er in vergleichsweise kurzen Sendeimpulsen Infrarotstrahlung 14 aussendet, wobei diese kurzen Sendeimpulse durch vergleichsweise längere Sendepausen voneinander getrennt sind. Dadurch wird insbesondere die Gefahr einer Blendung eines Infrarotsichtgerätes eines entgegenkommenden Fahrzeugs verringert. Die Detektion durch den Detektor erfolgt synchron zu den Sendepulsen. Ein weiterer Vorteil des gepulsten Betriebs besteht darin, dass eine Lock-In-Verstärkung der detektierten Signale möglich ist.

Die während der Sendeimpulse vom Steuer- und Signalverarbeitungsgerät 18 erhaltenen Signale des Detektors 16 bilden die Grundlage für die Abbildung des Fahrzeugvorfeldes durch das Mittel 20. In den Sendepausen zwischen den einzelnen Sendepulsen ermittelt das Steuer- und Signalverarbeitungsgerät 18 in einer Ausgestaltung aus Signalen des Detektors 16 Werte der Untergrundstrahlung, die von der Umgebung, beispielsweise von Straßenlaternen, ausgeht und berücksichtigt die Ergebnisse dieser Untergrundmessung bei der Ansteuerung des Mittels 20 zur Visualisierung.

Der Signalfluss zwischen dem Infrarotstrahler 12 und dem Steuer- und Signalverarbeitungsgerät 18 erfolgt über Verbindungen 22.1, 22.2, ... , 22.n. Der Signalfluss zwischen dem Detektor 16 und dem Steuer- und Signalverarbeitungsgerät 18 erfolgt über eine Verbindung 24 und der Signalfluss zwischen dem Steuer- und Signalverarbeitungsgerät 18 und dem Mittel 20 zur Visualisierung erfolgt über eine Verbindung 26. Die Verbindungen 22.1 bis 22.n und 24, 26 sind in einer bevorzugten Ausgestaltung in der Form eines Bussystems realisiert, wobei bevorzugt weitere Steuergeräte, Sensoren und Stellglieder an das Bussystem angeschlossen sind. Auf diese Weise kann der Infrarotstrahler 12 auch mehrfach genutzt werden, zum Beispiel dadurch, dass seine Signale auch für Abstandsmessungen im Stop-and-Go-Verkehr und/oder für ein automatisch erfolgendes Einparken verwendet werden.

In diesem technischen Umfeld zeichnet sich die vorliegende Erfindung dadurch aus, dass der Infrarotstrahler 12 wenigstens zwei Module 28 und 30 aufweist, von denen jedes einzelne Modul wenigstens eine Halbleiter-Infrarotstrahlungsquelle und eine Licht 14 der jeweiligen Halbleiter-Infrarotstrahlungsquelle verteilende optische Vorrichtung aufweist. So weist ein erstes Modul 28 insbesondere einer Halbleiter-Infrarotstrahlungsquelle 32 und eine Infrarotstrahlung der Halbleiter-Infrarotstrahlungsquelle 32 verteilende optische Vorrichtung 34 auf. Das zweite Modul 30 weist eine zweite Halbleiter-Infrarotstrahlungsquelle 36 und eine zweite Licht 14 der zweiten Halbleiter-Infrarotstrahlungsquelle 36 verteilende optische Vorrichtung 38 auf.

Die rechts von den beiden Modulen 28 und 30 dargestellte punktierte Linie deutet an, dass Ausgestaltungen erfindungsgemäßer Infrarotstrahler 12 auch mehr als zwei Module aufweisen können. Die Zahl der Module kann also, je nach Ausgestaltung, gleich n sein, wobei n eine Zahl ≥ 2 ist. Je eine vom Steuer- und Signalverarbeitungsgerät 18 ausgehende Verbindung 22.1 bis 22.n verbindet je eines der Module mit dem Steuer- und Signalverarbeitungsgerät 18.

Die optischen Vorrichtungen 34 und 38 sind in der Fig. 1 in der Form von Reflektoren dargestellt. Soweit in dieser Anmeldung jedoch von optischen Vorrichtungen mit dem Bezugszeichen 34 und 38 in dieser allgemeinen Form die Rede ist, sollen damit nicht nur Reflektoren, sondern auch alle anderen Mittel gemeint sein, die sich zur Verteilung von Infrarotstrahlung eignen. Ausgestaltungen solcher Mittel werden weiter unten angegeben. Unter einer Verteilung der Infrarotstrahlung wird darüber hinaus nicht jede beliebige Streuung des Infrarotlichts verstanden sondern vielmehr eine gezielt erfolgende Umlenkung der von der jeweiligen Halbleiter-Infrarotstrahlungsquelle 32, 36 der beteiligten Module 28, 30 (und gegebenenfalls weiterer Module) ausgehenden Infrarotstrahlung in ein gewünschtes und/oder vorgeschriebenes Beleuchtungsintensitätsmuster im zu beleuchtenden Bereich des Umfeldes des Kraftfahrzeuges.

Ein Beispiel eines solchen Intensitätsmusters, das im Folgenden auch als Strahlungsverteilung bezeichnet wird, ist in der Fig. 2 dargestellt. Fig. 2 zeigt Linien gleicher Beleuchtungsintensität in einer Ebene, die von einer Horizontalen H und einer Vertikalen V aufgespannt wird. Die Horizontale H liegt zum Beispiel parallel zu einer Querachse des Straßenkraftfahrzeugs und die Vertikale V liegt parallel zu einer Hochachse des Kraftfahrzeugs. Die Zahlenwerte sind Winkelgrad-Angaben. Das Wertepaar (0, 0) liegt auf der Verlängerung einer Längsachse einer Beleuchtungseinrichtung, in der der Infrarotstrahler eingebaut ist. Die Intensität ist längs einer Linie konstant und nimmt von außen nach innen zu. Im Bezug auf die Werte ihrer Intensität besitzen beliebige benachbarte Linien jeweils den gleichen Abstand. Die als Beispiel dargestellte Strahlungsverteilung ist längs der Horizontalen H etwa 16° breit und erstreckt sich in der Vertikalen etwa über 12 Winkelgrade. Durch diese im Vergleich zu ihrer Höhe etwas größere Breite wird die Ausleuchtung der seitlichen Randbereiche des Sichtfeldes des Infrarotsichtgeräts 10 zu Lasten der anderen Bereiche der Ausleuchtung verbessert. Es ist darüber hinaus erkennbar, dass die in der Fig. 2 dargestellte Infrarotstrahlungsverteilung 42 eine Fernlichtcharakteristik, das heißt eine Charakteristik ohne Rechts/Links-Asymmetrie und insbesondere ohne eine asymmetrisch verlaufende Helldunkelgrenze, wie sie beim Abblendlicht im sichtbaren Bereich üblich ist, aufweist. Die Strahlungsverteilung 42 ergibt sich als Ergebnis einer Überlagerung der Infrarotstrahlungs-Intensitätsbeiträge von n = 5 Modulen 28, 30 und so weiter, wobei die einzelnen Module jeweils einen Reflektor als Strahlung verteilende optische Vorrichtung 34 aufweisen.

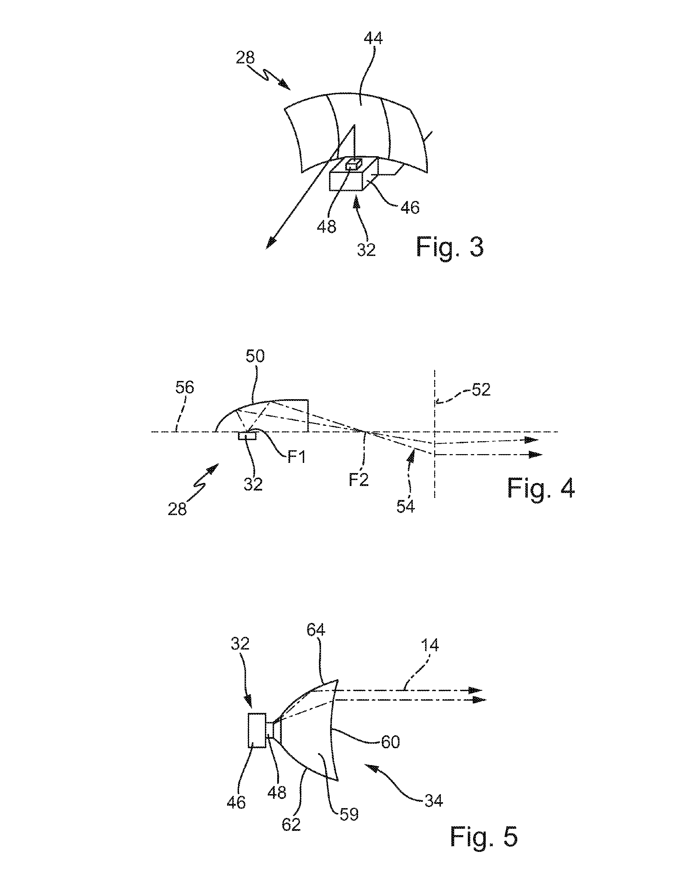

Die Fig. 3 zeigt ein einzelnes solches Modul 28 mit einer Halbleiter-Infrarotstrahlungsquelle 32 und einem Reflektor 44 als Licht verteilender optischer Vorrichtung 34. Der Reflektor 44 besitzt in einer bevorzugten Ausgestaltung eine parabolische Grundform mit einem Brennpunkt, in dem die Lichtaustrittsfläche der Halbleiter-Infrarotstrahlungsquelle 32 angeordnet ist. Die Halbleiter-Infrarotstrahlungsquelle 32 ist in einer Ausgestaltung eine auf einem Montageträger 46 stoffschlüssig angeordnete Infrarotleuchtdiode 48, die eine Lichtaustrittsfläche in der Größenordnung von 1 mm² besitzt. Infrarot-Leuchtdioden sind als solche bekannt und weisen zum Beispiel Galliumarsenid (GaAs) oder Aluminiumgalliumarsenid (AlGaAs) als Halbleitermaterial auf. Die stoffschlüssige Verbindung des Substrates der Infrarot-Leuchtdiode erfolgt zum Beispiel durch Kleben.

Um eine gewünschte Strahlungsverteilung, beziehungsweise um einen gewünschten Beitrag zu einer Summenstrahlungsverteilung zu erzielen, ist der Reflektor 44 in einer bevorzugten Ausgestaltung als sogenannter Freiformreflektor realisiert. Dabei wird unter einem Freiformreflektor ein Reflektor verstanden, dessen Reflektoroberfläche gezielt so geformt ist, dass einzelne Punkte und/oder Bereiche der Reflektoroberfläche so angeordnet und ausgerichtet sind, dass sie vom Brennpunkt aus einfallendes Licht gezielt in bestimmte Bereiche des Reflektorvorfeldes reflektieren, so dass sich in der Summe sämtlicher Beiträge einzelner Reflektorpunkte und/oder Reflektorsegmente die gewünschte Strahlungsverteilung ergibt. In einer Ausgestaltung ist der Reflektor 44 40 mm bis 50 mm breit und 25 mm bis 35 mm hoch. Dieses Beispiel bezieht sich auf einen Infrarotstrahler mit fünf gleichen Modulen. Je nach Zahl der verwendeten Module und je nach Strahlungsleistung der in einem Modul verwendeten Halbleiter-Infrarotstrahlungsquelle können sich auch andere Abmessungen als vorteilhaft erweisen.

Die Fig. 3 zeigt damit insbesondere ein Modul 28 dessen optische Vorrichtung 34 einen Reflektor 44 aufweist, der mit seiner zugeordneten Halbleiter-Infrarotstrahlungsquelle 32 ein Reflexionssystem bildet. Dabei wird unter einem Reflexionssystem ein System verstanden, bei dem die erwünschte Strahlungsverteilung durch den Reflektor 44 erfolgt.

Ein aus solchen Modulen aufgebauter Infrarotstrahler besteht aus mehreren Infrarotstrahlung emittierenden Einzel-Chip-LEDs, die jeweils im Brennpunkt einer auf Parabeln basierenden Reflektorkammer (d.h. dem vom Reflektor umwölbten Raum) positioniert sind. Die von den einzelnen LEDs abgegebene Strahlung wird von den Reflektoren gesammelt und in die Fahrtrichtung gelenkt.

Die von den einzelnen Reflektorkammern ausgesandten Strahlenbündel bilden dann in der Summe die für das menschliche Auge unsichtbare Gesamtstrahlungsverteilung, mit der die Fahrbahn ausgeleuchtet wird. Die Reflektoren können als Freiformflächen ausgelegt sein, um die Form der Strahlungsverteilung in ihrer Streubreite und ihrer Streuhöhe frei zu gestalten.

Dabei ist es denkbar, die einzelnen Reflektorflächen unterschiedlich auszugestalten, um mit den einzelnen Reflektorkammern unterschiedliche Bereiche der infraroten Strahlungsverteilung zu generieren. Eine Teilmenge der Kammern erzeugt zum Beispiel das Zentrum der Strahlungsverteilung und damit das Maximum, und eine andere Teilmenge bestimmt die seitliche Ausleuchtung der Verteilung. Die modulare Bauweise bietet eine große Designfreiheit. Der zur Verfügung stehende Bauraum der Scheinwerfer kann optimal genutzt werden.

Die Fig. 4 zeigt eine alternative Ausgestaltung eines Moduls 28, bei dem die optische Vorrichtung 34 einen Reflektor 50 und eine Projektionslinse 52 aufweist. Der Reflektor 50 ist bevorzugt ein Freiformreflektor, der so ausgestaltet ist, dass er im Zusammenwirken mit der Projektionslinse 52 eine gewünschte Strahlungsverteilung aus dem Licht einer Halbleiter-Infrarotstrahlungsquelle 32 erzeugt. Der Reflektor 50 weist bevorzugt eine ellipsoide Grundform auf. Die Halbleiter-Infrarotstrahlungsquelle 32 ist bevorzugt in einem ersten Brennpunkt F1 des Reflektors angeordnet, so dass der Reflektor 50 das von der Halbleiter-Infrarotstrahlungsquelle 32 ausgehende Licht in einem zweiten Brennpunkt F2 bündelt.

Der zweite Brennpunkt bildet damit gewissermaßen eine virtuelle Lichtquelle, von der ein divergentes Strahlenbündel 54 ausgeht. Dieses divergente Strahlenbündel wird von der Projektionslinse 52 in das Vorfeld vor dem Modul 28 und damit in das Vorfeld des Infrarotstrahlers 12 projiziert. Die optischen Eigenschaften des Reflektors 50 und der Projektionslinse 52 und ihre geometrische Anordnung relativ zueinander sind dabei so aufeinander abgestimmt, dass sich im Zusammenwirken die gewünschte Strahlungsverteilung im Vorfeld des Moduls 28 einstellt. Die Projektionslinse besteht bevorzugt aus Glas oder einem transparenten Kunststoff.

Die Fig. 4 zeigt damit insbesondere eine optische Vorrichtung 34, die einen Reflektor 50 und eine Projektionslinse 52 aufweist, wobei die optische Vorrichtung 34 zusammen mit der Halbleiter-Infrarotstrahlungsquelle 32 ein Projektionssystem bildet.

Sowohl für das Reflexionssystem nach Fig. 3 als auch für das Projektionssystem nach Fig. 4 gilt, dass die Reflektoren 44 und 50 sich jeweils nur in einen Halbraum auswölben müssen, da die Halbleiter-Infrarotstrahlungsquellen ihren gesamten Lichtstrom in einem Lichtkegel emittieren, der innerhalb eines Halbraums liegt. Die Forderung, dass sich die Reflektoren nur in einen Halbraum erstrecken müssen, wird insbesondere aus der Fig. 4 deutlich, bei der die gesamte Reflektorfläche des Reflektors 50 oberhalb einer optischen Achse 56 des Moduls 28 liegt.

Das Projektionssystem nach der Fig. 4 hat gegenüber dem Reflexionssystem nach der Fig. 3 den Vorteil, dass seine senkrecht zur optischen Achse 56 erforderliche Höhe geringer ausfallen kann. Dieser Vorteil wird jedoch dadurch erkauft, dass das Projektionssystem in Richtung der optischen Achse eine größere Einbautiefe fordert als das im Vergleich dazu besonders kurze Reflexionssystem. Das Reflexionssystem benötigt in Richtung der optischen Achse vergleichsweise weniger Einbautiefe, weil es keine Hintereinanderanordnung von Reflektor und Linse erfordert.

Eine weitere Ausgestaltung eines Infrarotstrahlers 12 zeichnet sich dadurch aus, dass die optische Vorrichtung 34 eine Projektionslinse 52 aufweist und die Projektionslinse 52 zusammen mit der Halbleiter-Infrarotstrahlungsquelle 32 ein die Halbleiter-Infrarotstrahlungsquelle 32 direkt abbildendes Projektionssystem bildet. Ein solches direkt abbildendes System benötigt keinen quer zur optischen Achse ausgedehnten Reflektor und besitzt daher einen entsprechend einfachen und wenig Bauraum erfordernden Aufbau.

Die Fig. 5 zeigt eine weitere Ausgestaltung einer optischen Vorrichtung 34, die dazu eingerichtet ist, Licht 14 einer Halbleiter-Infrarotstrahlungsquelle 32 so zu verteilen, dass sich eine gewünschte Strahlungsverteilung im Vorfeld des Infrarotstrahlers 12 ergibt. Beim Gegenstand der Fig. 5 ist dicht vor der Licht emittierenden Fläche der Infrarotleuchtdiode 48 einer Halbleiter-Infrarotstrahlungsquelle 32 eine Infrarotstrahlung brechende und intern gegebenenfalls total reflektierende Vorsatzoptik 59 aus für Infrarotstrahlung transparentem Material angeordnet. Das über eine Lichteintrittsfläche 58 der Vorsatzoptik 59 in die Vorsatzoptik eingekoppelte Licht der Infrarotleuchtdiode 48 wird entweder direkt oder nach einer an Seitenwänden 62, 64 der Vorsatzoptik 59 erfolgenden internen Totalreflexion über eine Lichtaustrittsfläche 60 der Vorsatzoptik 59 in das Vorfeld vor dem Infrarotstrahler 12 umgelenkt. Die interne Totalreflexion erfolgt dabei in Fällen, in denen der auf das Lot bezogene Einfallswinkel der in der Vorsatzoptik propagierenden Strahlung auf die Seitenwände 62, 64 größer als ein Grenzwinkel ist, der sich aus den Brechzahlen des optisch dichteren Materials der Vorsatzoptik und der Luft ergibt.

Die Umlenkung kann durch entsprechende Ausgestaltung der total reflektierenden Seitenwänden 62 und 64 sowie der Licht brechenden Lichtaustrittsfläche 60, die eine Grenzfläche zwischen dem optisch dichteren Material der Vorsatzoptik 59 und der optisch dünneren Luft bildet, gezielt beeinflusst werden. In einer Ausgestaltung sind diese Parameter gezielt so vorbestimmt, dass sich eine gewünschte Strahlungsverteilung im Vorfeld des Infrarotstrahlers 12 einstellt.

Die Fig. 5 zeigt damit insbesondere eine optische Vorrichtung 34 mit einer Licht brechenden Vorsatzoptik 59 aus Licht leitendem Material. Eine optische Vorrichtung 34, die eine solche Vorsatzoptik 59 aufweist zeichnet sich durch einen besonders kompakten Aufbau aus.

Die Vorsatzoptik 59 ist selbst so kompakt, dass sie auch mit den Ausgestaltungen nach den Figuren 3 und 4 kombiniert werden kann. Eine Ausgestaltung zeichnet sich demnach dadurch aus, dass das Reflexionssystem, wie es in der Fig. 3 dargestellt ist, zusätzlich eine Vorsatzoptik 59 zwischen der Lichtaustrittsfläche der Infrarotleuchtdiode 48 und dem Reflektor 44 aufweist. Eine weitere Ausgestaltung zeichnet sich dadurch aus, dass ein Projektionssystem, wie es in der Fig. 4 dargestellt ist, zusätzlich eine Vorsatzoptik 59 zwischen der Lichtaustrittsfläche der zugehörigen Leuchtdiode und dem Reflektor 50 aufweist. Darüber hinaus ist die Vorsatzoptik auch gut mit einem Modul kombinierbar, das eine direkt abbildende Linse aufweist. In diesem Fall sind die Halbleiter-Infrarotstrahlungsquelle, die Vorsatzoptik und die Linse bevorzugt längs der optischen Achse des Moduls so angeordnet, dass die Vorsatzoptik von der Halbleiter-Infrarotstrahlungsquelle eingekoppelte Infrarotstrahlung in gebündelter Form auf die Linse richtet.

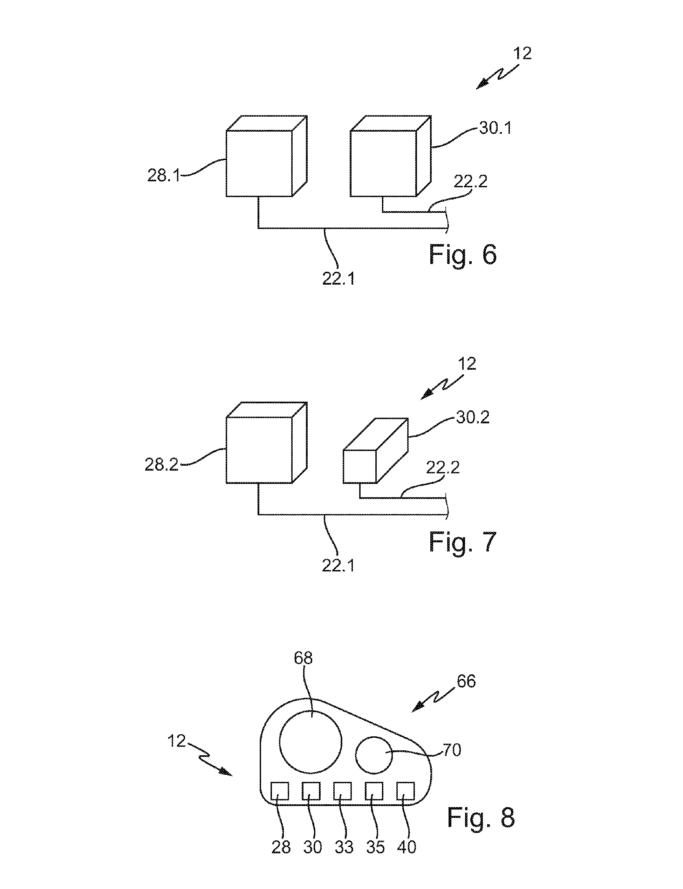

Die Fig. 6 zeigt eine Ausgestaltung eines Infrarotstrahlers 12, der mehrere untereinander gleiche Module 28.1, 30.1, ... aufweist. Die Module 28.1, 30.1 weisen zum Beispiel jeweils eine optische Vorrichtung mit einem Reflexionssystem auf. Alternativ weisen sie eine optische Vorrichtung mit einem Projektionssystem oder eine optische Vorrichtung mit einer Licht brechenden Vorsatzoptik oder eine optische Vorrichtung mit einer Licht brechenden Vorsatzoptik in Kombination mit einem Reflexionssystem oder in Kombination mit einem Projektionssystem auf. Diese Ausgestaltung lässt sich insbesondere kostengünstig herstellen.

Die Fig. 7 zeigt eine dazu alternative Ausgestaltung, bei der ein Infrarotstrahler 12 mehrere untereinander verschiedene Module 28.2, 30.2 aufweist. Das Modul 28.2 weist in einer Ausgestaltung eine optische Vorrichtung mit einem Reflexionssystem auf, während das zweite Modul 30.2 eine optische Vorrichtung 34 mit einem Projektionsmodul aufweist. Entsprechend ist für die Anordnung des ersten Moduls 28.2 ein Einbauraum mit einer vergleichsweise großen Höhe erforderlich, wobei aber gleichzeitig die Anforderungen an die Einbautiefe vergleichsweise gering sind. Im Gegensatz dazu ist für den Einbau des zweiten Moduls 30.2 ein Einbauraum mit einer vergleichsweise geringen Höhe und einer dafür aber vergleichsweise größeren Einbautiefe erforderlich.

Diese Ausgestaltung besitzt gegenüber einer Ausgestaltung mit standardisiert gleichen Modulen den Vorteil, dass sich eine Strahlungsverteilung, die bestimmte gewünschte Eigenschaften aufweist, leichter und besser erzielen lässt. So sind zum Beispiel parabolische Reflektoren mit vergleichsweise großer Brennweite vergleichsweise gut zur Erzeugung eines schmalen und langreichweitigen Anteils an einer gewünschten Infrarotstrahlungsverteilung geeignet, während sich parabolische Reflektoren mit vergleichsweise kurzer Brennweite gut zur Erzeugung eines breiteren, eine kürzere Reichweite aufweisenden Anteils an der Strahlungsverteilung eignen. Eine weitere Ausgestaltung zeichnet sich dadurch aus, dass die zur Erzeugung des breiteren, eine kürzere Reichweiter aufweisenden Anteils der Strahlungsverteilung dienenden Reflektoren Facetten in der reflektieren Oberfläche aufweisen, mit denen die Strahlung gezielt breiter verteilt wird als es ohne solche Facetten der Fall wäre.

Ein weiterer Vorteil der Verwendung von untereinander verschiedenen Modulen liegt darin, dass sich eine bessere Anpassung an eine vorgegebene Einbauraum-Geometrie erzielen lässt. So können äußere Ränder von Reflektorkammern der einzelnen Module zum Beispiel so ausgestaltet sein, dass sie einer vorgegebenen ungleichmäßig gekrümmten Kontur folgen. Ein anderes Beispiel besteht darin, dass Module mit unterschiedlich großen Reflektorkammern verwendet werden, um unterschiedlich große Einbauräume, die innerhalb eines Gehäuses einer Beleuchtungseinrichtung zur Verfügung stehen, jeweils raumausfüllend auszunutzen.

Diese Ausgestaltungen zeigen, wie durch eine Verwendung verschiedener Module auch kleine Einbauraumlücken, die zudem verschieden hoch und tief sind, für den Einbau einzelner Module eines erfindungsgemäßen Infrarotstrahlers verwendet werden können. Dadurch ergibt sich eine Vielzahl von Verwendungsmöglichkeiten eines erfindungsgemäßen Infrarotstrahlers bei verschiedenen Scheinwerfern, ohne dass diese verschiedenen Scheinwerfer jeweils in ihrer Gestalt geändert werden müssten, um Platz für einen monolithisch aufgebauten Infrarotstrahler oder für einen aus lauter gleichen Modulen bestehenden Infrarotstrahler bereitzustellen.

Die Ausgestaltung mit den untereinander gleichen Modulen 28.1, 30.1 hat dem gegenüber den Vorteil eines einheitlicheren Erscheinungsbildes, was aus gestalterischen Gesichtspunkten dann von Vorteil ist, wenn die Infrarotstrahlung abstrahlenden Flächen des Infrarotstrahlers von außen erkennbar sind. Außerdem ist sie besonders kostengünstig.

Die Fig. 8 zeigt das Erscheinungsbild eines Scheinwerfers 66, bei dem fünf Module 28, 30, 33, 35, 40 eines Infrarotstrahlers 12 unterhalb von zwei Lichtmodulen 68, 70 angeordnet sind, die dazu eingerichtet sind, Scheinwerfer und/oder Bugleuchten-Lichtfunktionen im sichtbaren Bereich zu realisieren, also zum Beispiel Abblendlichtfunktionen, Fernlichtfunktionen, Nebellichtfunktionen, Tagfahrlichtfunktionen, Blinklichtfunktionen und Markierungslichtfunktionen, wobei diese Aufzählung nicht abschließend gemeint ist und die einzeln aufgezählten Funktionen insofern lediglich als Beispiele verstanden werden sollen.

Der Infrarotstrahler 12 ist in einer Ausgestaltung in einer Beleuchtungseinrichtung für ein Kraftfahrzeug angeordnet. Die Beleuchtungseinrichtung ist in einer Ausgestaltung ein Scheinwerfer, der auch wenigstens ein Lichtmodul zur Erzeugung einer Lichtverteilung wie einer Abblendlichtverteilung und/oder einer Fernlichtverteilung und/oder einer Nebellichtverteilung aufweist, wobei diese Aufzählung nicht als abschließend zu verstehen ist.

In einer alternativen Ausgestaltung ist der Infrarotstrahler 12 in einer Bugleuchte untergebracht. Die Bugleuchte ist in einer Ausgestaltung eine Blinkleuchte oder eine Tagfahrlicht-Leuchte, wobei auch hier gilt, dass diese Aufzählung nicht abschließend sein soll. Unter Leuchten werden hier allgemein Beleuchtungseinrichtungen verstanden, die Signalisierungszwecken dienen. Unter Scheinwerfern werden dagegen Beleuchtungseinrichtungen verstanden, die das Umfeld des Kraftfahrzeugs erleuchten, um dem Fahrer unbeleuchtete Objekte, die sich in seinem Fahrweg befinden, sichtbar zu machen.

Eine weitere Ausgestaltung sieht vor, dass der Infrarotstrahler in einer separaten Beleuchtungseinrichtung als separater Infrarotscheinwerfer realisiert ist.

Die Module 28, 30, 33, 35, 40 eines Infrarotstrahlers 12 sind in einer bevorzugten Ausgestaltung auf einem gemeinsamen Rahmen oder Träger in einer Beleuchtungseinrichtung für ein Kraftfahrzeug angeordnet.

Dabei ist der Träger in der Beleuchtungseinrichtung bevorzugt um eine horizontale Achse schwenkbar angeordnet, um eine Einstellung der Leuchtweite, sei es manuell oder automatisch, zu erlauben. Bei einer Anordnung des Infrarotstrahlers in einem auch Lichtmodule für sichtbares Abblendlicht und/oder Fernlicht aufweisenden Scheinwerfer sieht eine bevorzugte Ausgestaltung vor, dass der Träger relativ zu den Lichtmodulen für sichtbares Licht schwenkbar ist, um eine Grundeinstellung der Infrarotstrahlungsausbreitungsrichtung relativ zur Ausbreitungsrichtung des sichtbaren Lichtes, insbesondere des Abblendlichtes zu erlauben.

Eine alternative Ausgestaltung sieht vor, dass die Module einzeln oder zu mehreren auf mehreren separaten Trägern oder Rahmen in der Beleuchtungseinrichtung befestigt sind.

Unabhängig davon, ob die Module des Infrarotstrahlers zusammen auf einem einzelnen Träger oder einzeln oder in mehreren Gruppen auf mehreren Trägern verteilt angeordnet und befestigt sind, erfolgt die Befestigung bevorzugt so, dass die Module parallel zur Fahrzeuglängsachse ausgerichtet sind, so dass die Infrarotstrahlung eine nach vorn weisende Vorzugsrichtung aufweist.

Bevorzugt ist auch, dass die Module einzeln oder gemeinsam schwenkbar sind, wie es von üblichen Abblendlichtmodulen und/oder Fernlichtmodulen bekannt ist. Besonders bevorzugt ist dabei, dass die Module um eine horizontale Achse herum schwenkbar ausgestaltet sind, um eine Leuchtweite der Infrarotstrahlung zu regeln. Ergänzend sieht eine weitere Ausgestaltung eine Schwenkbarkeit um eine vertikale Achse vor, wie es von Kurvenlichtmodulen bekannt ist, die Lichtverteilungen im Bereich des sichtbaren Lichtes erzeugen.

Bei Infrarotstrahlern, die zusammen mit schwenkbaren Lichtmodulen für sichtbares Licht in einem gemeinsamen Gehäuse angeordnet sind, sieht eine Ausgestaltung vor, dass die Module des Infrarotstrahlers in einem gemeinsamen Schwenkrahmen mit einem Lichtmodul für sichtbares Licht angeordnet und befestigt sind und zusammen geschwenkt werden. Dadurch wird eine Schwenkbarkeit der Lichtmodule für sichtbares Licht und der Module des Infrarotstrahlers mit einem geringen Aufwand bereitgestellt, da die gleichen Schwenkrahmenstrukturen und Gelenke sowie Antriebsmotoren, Steuerungsstrukturen und Sensoren für die Fahrzeugneigung sowohl für das Schwenken der Lichtbündel des sichtbaren Lichtes und der Infrarotstrahlung benutzt werden können.

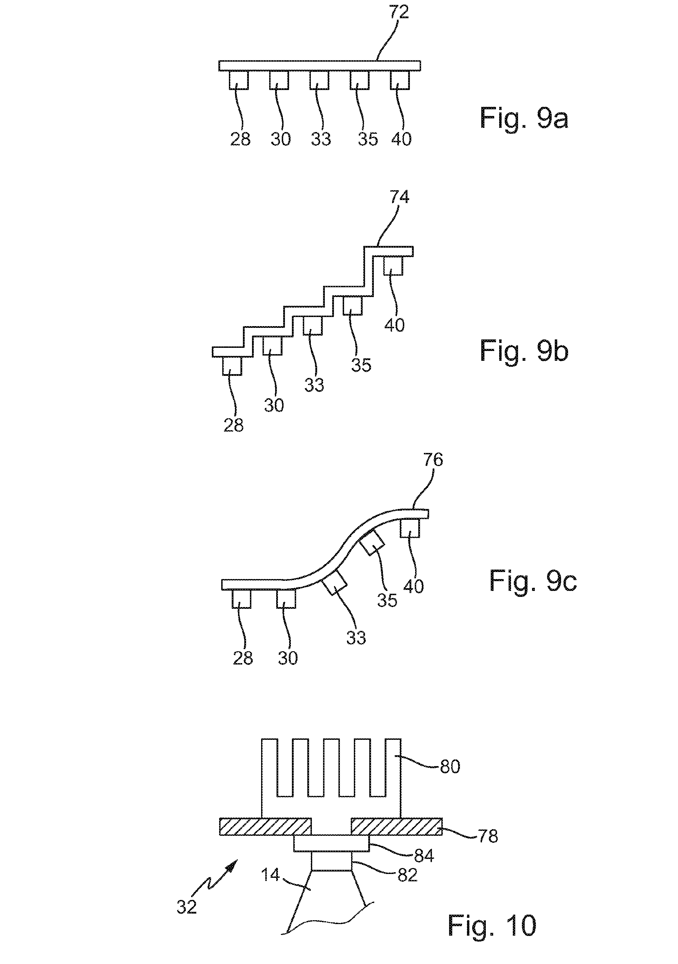

Die Fig. 9 zeigt verschiedene Ausgestaltungen von Infrarotstrahlern 12, die sich dadurch auszeichnen, dass die verschiedenen Module 28, 30, 33, 35, 40 des Infrarotstrahlers 12, von denen jedes einzelne wenigstens eine Halbleiter-Infrarotstrahlungsquelle und eine Strahlung der Halbleiter-Infrarotstrahlungsquelle verteilende optische Vorrichtung aufweist, über eine gemeinsame Platine 72, 74 oder 76 mit elektrischer Leistung versorgt und/oder gesteuert werden.

Folgt die Aneinanderreihung der einzelnen Reflektorkammern keiner oder nur einer geringen Krümmung kann zur Aufnahme und Kontaktierung der einzelnen LED-Gehäuse eine ebene Platine oder eine gestufte Platine verwendet werden. Bei größeren Krümmungen sind Flexfoil-Leiterbahnen denkbar.

Die Fig. 9a zeigt eine starre, ebene Platine 72, während die Fig. 9b eine starre, gestufte Platine 74, und die Fig. 9c eine flexible krümmbare Platine 76 zeigt. Die starren Platinen 72, 74 besitzen gegenüber der flexiblen Platine 76 den Vorteil einer größeren Robustheit bei der Handhabung des Infrarotstrahlers 12, was zum Beispiel die Herstellung eines Scheinwerfers 66 mit einem in das Scheinwerfergehäuse integrierten Infrarotstrahler 12 vereinfacht. Außerdem sind starre Platinen preisgünstiger als flexible Platinen. Die flexible Platine hat dem gegenüber vor allem den Vorteil der besseren Anpassbarkeit an Krümmungen, die der zur Verfügung stehende Einbauraum aufweist. Die gestufte aber starre Platine 74 stellt in gewisser Weise einen Kompromiss zwischen der ebenen und starren Platine 72 und der flexiblen Platine 76 dar.

Die Fig. 10 zeigt eine Ausgestaltung einer Halbleiter-Infrarotstrahlungsquelle 32, die dazu eingerichtet ist, Infrarotstrahlung 14 zu emittieren, zusammen mit einer Platine 78 und einem Kühlkörper 80. Die Halbleiter-Infrarotstrahlungsquelle 32 weist einen oder mehrere Chips 82 aus Halbleitermaterial auf, die durch ihr Material und ihre Dotierung dazu eingerichtet sind, Infrarotstrahlung 14 zu generieren. Der oder die Chips 82 sind auf einem Substrat oder Montageträger 84 angeordnet, über den die Halbleiterschichten elektrisch kontaktiert werden. Der Montageträger ist auf einer Platine 78 befestigt, die eine starre und ebene Platine 72, oder eine starre und gestufte Platine 74 oder eine flexible Platine 76 der in der Fig. 9 dargestellten Art sein kann. Dabei ist bevorzugt, dass der Montageträger 84 durch die Platine hindurch von seiner Rückseite her mit einem Kühlkörper 80 thermisch gekoppelt ist. Alternativ oder ergänzend zu einem solchen Halbleiter-Infrarotstrahlungsquellen-individuellen Kühlkörper 80 kann eine Platine mit einem integrierten Kühlkörper, beispielsweise in Form einer Metallkernplatine verwendet werden.

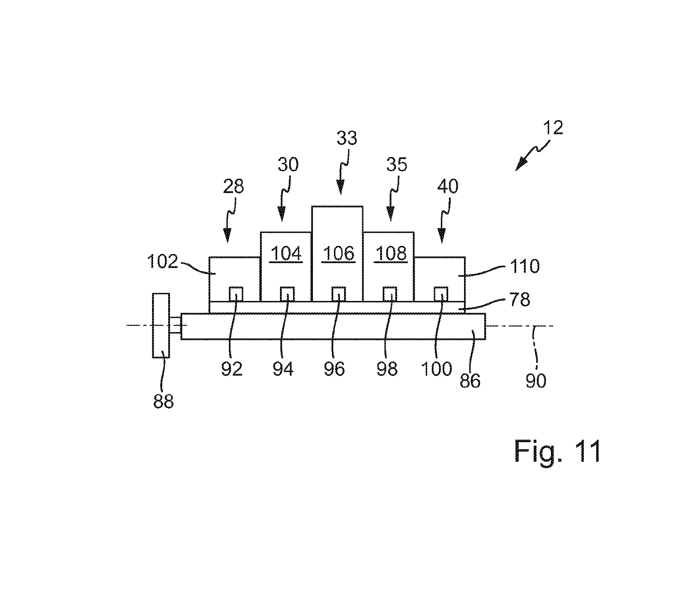

Die Fig. 11 zeigt eine bevorzugte Ausgestaltung eines Infrarotstrahlers 12, der Module 28, 30, 33, 35, 40 aufweist, von denen jedes eine Infrarotstrahlung emittierende Halbleiter-Infrarotstrahlungsquelle 92, 94, 96, 98, 100 und eine Strahlung der Halbleiter-Infrarotstrahlungsquelle 92, 94, 96, 98, 100 verteilende optische Vorrichtung 102, 104, 106, 108, 110 aufweist. Die optischen Vorrichtungen sind in einer Ausgestaltung unterschiedliche große Reflektoren. Die Halbleiter-Infrarotstrahlungsquellen 92, 94, 96, 98, 100 sind zusammen mit ihrer Platine 78 auf einem gemeinsamen Träger 86 befestigt. Der gemeinsame Träger ist parallel zu einer horizontalen Achse 90 ausgerichtet und um diese Achse 90 herum schwenkbar in einer Beleuchtungseinrichtung gelagert, um eine Leuchtweiteneinstellung zu ermöglichen. Zur Einstellung dient ein Verstellmittel 88, das bevorzugt als manuell betätigbare Verstellmechanik oder als elektrisch betätigbare Verstellmechanik ausgestaltet ist. Bei einem Scheinwerfer, der zusätzlich zu einem Infrarotstrahler 12 noch Lichtmodule für sichtbares Licht, insbesondere Abblendlicht oder Fernlicht, aufweist, sehen bevorzugte Ausgestaltungen Folgendes vor:
Gegenüber einem Lichtmodul für sichtbares Licht ist der Träger 86 durch Verschwenkung einstellbar, so dass die Strahlungsverteilung des Infrarotstrahlers 12 am Bandende bei der Fertigung des Scheinwerfers relativ zu der Lichtverteilung des Lichtmoduls für sichtbares Licht eingestellt werden kann. Dadurch wird eine Grundeinstellung der Infrarotstrahlungsverteilung relativ zu der Lichtverteilung für das sichtbare Licht erzeugt.

Darüber hinaus sieht eine Ausgestaltung vor, dass der Träger 86 zusätzlich so mit dem Lichtmodul für sichtbares Licht mechanisch gekoppelt ist, dass der Infrarotstrahler 12 im Betrieb zusammen mit dem Lichtmodul für sichtbares Licht um eine horizontale Achse geschwenkt wird. Dadurch wird eine Leuchtweitenregelung für die Infrarotstrahlung ohne großen Aufwand durch eine Ankopplung an eine häufig ohnehin vorhandene Leuchtweitenregelung für sichtbares Licht erzielt.

## Patentansprüche

1. Infrarotstrahler (12) für ein Infrarotsichtgerät (10) eines Straßenkraftfahrzeuges, der wenigstens eine Infrarotstrahlung emittierende Halbleiter-Infrarotstrahlungsquelle aufweist, **dadurch gekennzeichnet, dass** der Infrarotstrahler (12) wenigstens zwei Module (28, 30) aufweist, von denen jedes einzelne Modul (28, 30) wenigstens eine Infrarotstrahlung (14) emittierende Halbleiter-Infrarotstrahlungsquelle (32, 36) und eine Infrarotstrahlung (14) der Halbleiter-Infrarotstrahlungsquelle (32, 36) verteilende optische Vorrichtung (34, 38) aufweist.

2. Infrarotstrahler (12) nach Anspruch 1, **dadurch gekennzeichnet, dass** eine optische Vorrichtung (34) einen Reflektor (44) aufweist und die Halbleiter-Infrarotstrahlungsquelle (32) zusammen mit dem Reflektor (44) ein Reflexionssystem bildet.

3. Infrarotstrahler (12) nach Anspruch 1, **dadurch gekennzeichnet, dass** eine optische Vorrichtung (34) einen Reflektor (50) und eine Projektionslinse (52) aufweist und die optische Vorrichtung (34) zusammen mit der Halbleiter-Infrarotstrahlungsquelle (32) ein Projektionssystem bildet.

4. Infrarotstrahler (12) nach Anspruch 1, **dadurch gekennzeichnet, dass** die optische Vorrichtung (34) eine Projektionslinse (52) aufweist und die Projektionslinse (52) zusammen mit der Halbleiter-Infrarotstrahlungsquelle (32) ein die Halbleiterlichtlichtquelle (32) direkt abbildendes Projektionssystem bildet.

5. Infrarotstrahler (12) nach einem der vorhergehenden Ansprüche, **dadurch gekennzeichnet, dass** die optische Vorrichtung (34) eine Licht brechende Vorsatzoptik (59) aus Licht leitendem Material aufweist.

6. Infrarotstrahler (12) nach einem der vorhergehen Ansprüche, **dadurch gekennzeichnet, dass** der Infrarotstrahler (12) mehrere untereinander gleiche Module (28.1, 30.1, ...) und/oder mehrere untereinander verschiedene Module (28.2, 30.2, ...) aufweist.

7. Infrarotstrahler (12) nach einem der vorhergehenden Ansprüche, **dadurch gekennzeichnet, dass** die verschiedenen Module (28, 30, 33, 35, 40) über eine gemeinsame Platine (72, 74, 76) mit elektrischer Leistung versorgt werden und/oder gesteuert werden.

8. Infrarotstrahler (12) nach einem der vorhergehenden Ansprüche, **dadurch gekennzeichnet**, das Module (28, 30, 33, 35, 40) des Infrarotstrahlers (12), von denen jedes eine Infrarotstrahlung emittierende Halbleiter-Infrarotstrahlungsquelle (92, 94, 96, 98, 100) und eine Strahlung der Halbleiter-Infrarotstrahlungsquelle (92, 94, 96, 98, 100) verteilende optische Vorrichtung (102, 104, 106, 108, 110) aufweist, auf einem gemeinsamen Träger (86) befestigt sind.

9. Infrarotstrahler (12) nach Anspruch 8, **dadurch gekennzeichnet, dass** der gemeinsame Träger (86) parallel zu einer horizontalen Achse (90) ausgerichtet und um diese Achse (90) herum schwenkbar in einer Beleuchtungseinrichtung gelagert ist.

10. Beleuchtungseinrichtung für einen Kraftfahrzeug, **dadurch gekennzeichnet, dass** sie einen Infrarotstrahler (12) nach einem der vorhergehenden Ansprüche aufweist.

11. Beleuchtungseinrichtung nach Anspruch 10, **dadurch gekennzeichnet, dass** die Beleuchtungseinrichtung ein Kraftfahrzeugscheinwerfer (66) ist, der zusätzlich wenigstens ein Lichtmodul für sichtbares Licht aufweist.

12. Beleuchtungseinrichtung nach Anspruch 11, **dadurch gekennzeichnet, dass** der Träger (86) gegenüber einem Lichtmodul für sichtbares Licht durch Verschwenkung einstellbar ist.

13. Beleuchtungseinrichtung nach Anspruch 12, **dadurch gekennzeichnet, dass** der Träger (86) zusätzlich so mit dem Lichtmodul für sichtbares Licht mechanisch gekoppelt ist, dass der Infrarotstrahler (12) im Betrieb zusammen mit dem Lichtmodul für sichtbares Licht um eine horizontale Achse geschwenkt wird. Dadurch wird eine Leuchtweitenregelung für die Infrarotstrahlung ohne großen Aufwand durch eine Ankopplung an eine häufig ohnehin vorhandene Leuchtweitenregelung für sichtbares Licht erzielt.

14. Beleuchtungseinrichtung nach Anspruch 10, **dadurch gekennzeichnet, dass** die Beleuchtungseinrichtung eine Bugleuchte ist, die zusätzlich wenigstens eine Signallichtfunktionen erfüllende Lichtquelle aufweist.

15. Beleuchtungseinrichtung nach Anspruch 10, **dadurch gekennzeichnet, dass** sie als separater Infrarotscheinwerfer realisiert ist, der keine weiteren Lichtquellen für sichtbares Licht aufweist.
